# EUROPEAN PATENT SPECIFICATION

(11) **EP 0 475 902 B1**
(45) Date of publication and mention of the grant of the patent: **08.06.1994**
(21) Application number: 91810705.3
(22) Date of filing: 04.09.1991
(51) Int. Cl.: A01M 1/20

(54) **Point source insecticidal device**
Punktförmige Quelle für Insektizide
Source ponctuelle pour insecticide

(30) Priority: 10.09.1990 US 580018
(43) Date of publication of application: 18.03.1992
(73) Proprietor: SANDOZ LTD., 4002 Basel (CH); SANDOZ-PATENT-GMBH, 79539 Lörrach (DE); SANDOZ-ERFINDUNGEN Verwaltungsgesellschaft m.b.H., 1235 Wien (AT)
(72) Inventor: VanGundy, Douglas N., Dallas, Texas 75231 (US); Tate, Lloyd T., Temple, Texas 76504 (US); Duffey, Eric P., Farmers Branch, Texas 75234 (US); Pearce, Robert C., Arlington, Texas 76017 (US)

(56) References cited:
- EP-A- 0 094 499
- EP-A- 0 161 217
- FR-A- 2 417 940
- GB-A- 2 174 908

## Description

The present invention concerns a method and a device for the effective and long term control of household pests in particular cockroaches and other non-flying insects.

More particularly the invention concerns a point source release device for insecticidal compounds and its use in combatting household pests especially cockroaches and other non-flying insects.

In order to achieve adequate distribution of an insecticide to harborage areas of household pests to be controlled foggers and aerosols have been used which, however, suffer from the disadvantage of requiring the use of relatively large amounts of solvents, propellants and the like. Insecticides, especially for example insect growth regulators, may be incorporated in bait stations which are visited by the pests who then carry the insecticide back to the harborage areas. Such bait stations whilst achieving some effect have the disadvatage of relative unpredictability and often insufficient shelf-life.

Insecticides which are able to translocate through volatility or other properties would overcome many of the problems outlined above as they could be applied from strategically placed point sources from whence they would translocate to provide total coverage of the enclosed area to be treated. Until now however attempts to make such devices have failed largely because the very nature of these mobile compounds leads to low container-stability and thus to low shelf-life. An insect control device according to the preamble of Claim 1 is known from EP-A-94499.

It has now been found that excellent results can be achieved according to the invention by providing an insect control device which comprises a container poorly permeable to gases and liquids containing a liquid insecticidal substance capable of translocation; a sheet of absorbent material and an enclosure for said container and said absorbent sheet; said enclosure bearing multiple apertures to allow translocation of said insecticidal substance once said container is ruptured, characterized by, said container being frangible and being at least partially surrounded by a portion of said sheet of absorbent material; and said enclosure being made of flexible material and bearing a recess fashioned to accomodate said container, and bearing a pressure point or pressure pad at a location suitable for transmitting pressure for rupturing said container when pressure is applied to said enclosure. Other preferred embodiments and a method of controlling insects using such a device are described in Claims 2-9. Examples of materials from which the enclosure may be made are fiberboard, cardboard, rubber or preferably plastics, especially flexible plastics such as thermoplastic resins, e.g. polyethylene, polyvinyl chloride and the like. Other suitable materials will be evident to those skilled in the art.

In a preferred embodiment the absorbent sheet will be of synthetic or natural fiber, i.e. cloth or paper, e.g. filter paper. Other types of absorbent sheets which are suitable for translocating said insecticidal substance from said container to said perforations or apertures will be evident to those skilled in the art.

The container for the insecticide may be made from any materials which are frangible and poorly permeable to gases and liquids. Examples include rigid plastics such as thermosetting resins, e.g. polyacrylates and polystyrene or most preferably glass. Other suitable materials will be evident to those skilled in the art.

The device and its various components may be manufactured in conventional manners from the materials above.

An example of such a device comprises a flat circular disk that is mesh-like in construction. The disk also bears a pod-like recess in which lays a glass ampule containing the active ingredient (a.i.). The disk is made by injection molding. The device is molded as one piece comprising side by side equally sized disks but, upon final construction the device is overlapped to form a "sandwich". Between the overlapping disks is a piece of filter paper. One end of the filter paper extends into the pod and wraps around the ampule containing the a.i. Once complete the sandwich is fastened together around the rims of the now overlapping disk in a manner evident to those skilled in the art, e.g. by heat or sonic welding to maintain a permanent seal. Other methods of fastening include e.g. use of suitable adhesives or mechanical means such as locking non-retractable pin devices e.g. employing male pins having heads of greater diameter than the holes through which they may be deformably urged (c.f. US Patent 3,731,414). The area above the pod may be thickened to provide a pressure pad which facilitates rupture of the ampule on application of pressure.

The size of the device is not critical and will usually be dictated by convenience of packaging and handling. A circular device such as described above and below would conveniently be of the diameter between 5 and 8 cm. Other shapes are envisaged, e.g. rectangular, the particular shape and size being selected according to the environment in which the device will ultimately be used.

For use in combatting household pests especially insects such as cockroaches the user takes the device and ruptures the a.i. container, thus releasing the a.i. onto the absorbent sheet and places the device in an area which is as close as convenient to the insects harborage area. The a.i. then translocates through the perforations or apertures in the enclosure to eventually cover the surrounding area including the harborage area itself.

Such devices can be used in any areas where control of such pests is desired, e.g. single and multi-family dwellings, restaurants, zoos, nursing homes, pet shops, etc.

The number and placing of the devices will depend upon the size and layout of the area to be treated and the efficacy of the a.i. employed.

Suitable active ingredients are those which are capable of translocation and conveniently will have low polarity, moderate volatility (but not necessarily high vapor pressure) and high insecticidal activity. Examples of such compounds are the insect growth regulators described in USP 4,021,461 and USP 3,904,662. These include e.g. methoprene, kinoprene and especially hydroprene. Hydroprene is the common name for ethyl (2E,4E)-3,7,11-trimethyl-2,4-dodecadienoate. There is an asymmetric carbon atom at the C-7 in hydroprene and, accordingly, there are (R) and (S) enantiomers of the compound. As used herein "(R,S)-hydroprene" refers to the racemic mixture and "(S)-hydroprene" refers to hydroprene comprising the (S)-(+) enantiomer. Where "hydroprene" is used herein without reference to its enantiomeric content, the term is inclusive of both (R,S)-hydrprene and (S)-hydroprene.

Further suitable active ingredients are 2-chloro-N-[[[3,5-dichloro-4-[3,4,5-trichloro-1-pyrazolyl]phenyl]amino]carbonyl]-benzamide, propetamphos, fluvalinate, fluphenacur, cyromazine, chlorfluazuron, fenoxycarb, diflubenzuron, flucycloxuron, hexafluron, teflubenzuron, flufenoxuron, triflumuron, pyriproxyfen, chlorpyrifos ethyl, chlorpyrifos methyl, cypermethrin, lambda-cyhalothrin, cyfluthrin, fenvalerate, es fenvalerate, deltamethrin, fenpropathrin, bifenthrin, permethrin, ethofenprox, tralomethrin, alpha-cypermethrin and bendiocarb.

The active ingredient (a.i.) may be formulated as a liquid in a conventional manner prior to inclusion in the frangible container e.g. ampule. Where the a.i. is itself a liquid as is the case with hydroprene, it may be employed unformulated.

A discussion of the formulation and use of (R,S)-hydroprene and (S)-hydroprene against cockroaches is contained in UK Patent Application GB 2174908 and South African Patent 88/2605.

As mentioned above the number of devices employed will depend on various factors. However, satisfactory results are obtained, in the case of hydroprene, when employing sufficient devices to achieve an a.i. concentration of 12 to 50 mg/m² for (R,S)-hydroprene and 0.3 to 40 mg/m², especially 3 to 30 mg/m² for (S)-hydroprene.

A specific embodiment according to the invention will be described below.

Fig. 1 is a plan view of a device according to the invention prior to closure.

Fig. 2 is a side elevation of the device in Fig. 1.

Fig. 3 is the device as shown in Fig. 2 but in closed position.

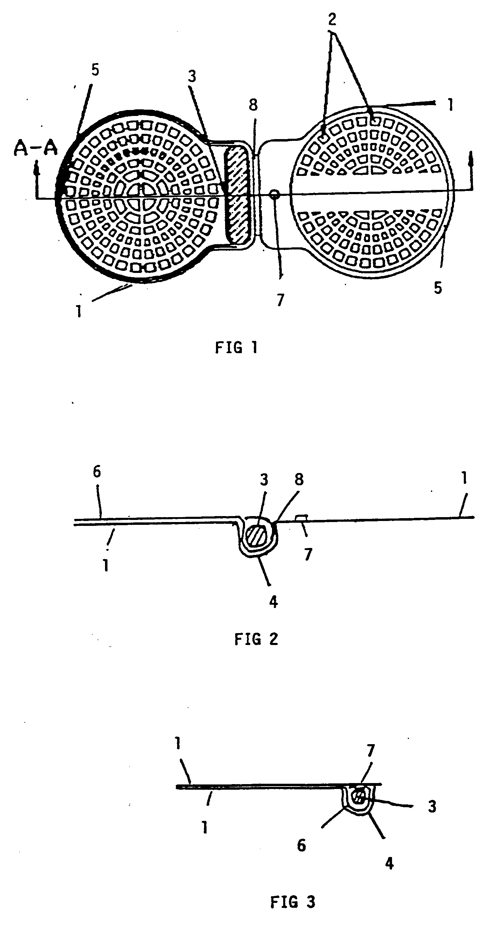

The device comprises two circular flexible plastic disks(1) of equal size hinged together in the manner of a bi-valve via hinge portion (8) of slightly thinner and thus more flexible plastic. The disks and hinge portion are formed as one piece e.g. by injection molding. One of the disks bears a pod-shaped recess (4) which contains a frangible ampule (3) containing the a.i. The other disk bears a pressure point (7) of thicker plastic which is located above the ampule when the device is closed as in fig. 3. The ampule rests on a filter paper sheet which surrounds it in the pod and extends over the area of one disk up to the rim (5). For clarity filter paper (6) is not shown in Fig. 1. Each disk bears a multitude of apertures (2). Once the ampule and filter paper have been placed in position and disks (1) are folded in upon each other and sealed around the rim (5), e.g. by heat or sonic welding.

To use, pressure is applied to the bottom of pod (4) and the pressure point (7), e.g. using finger and thumb causing the ampule (3) to rupture and release its contents onto the filter paper (6). The active ingredient then translocates from the device via apertures (2).

## Claims

1. An insect control device which comprises a container (3) poorly permeable to gases and liquids containing a liquid insecticidal substance capable of translocation, a sheet of absorbent material (6) and an enclosure (1) for said container (3) and said absorbent apertures sheet (6), said enclosure (1) bearing multiple apertures (2) to allow translocation of said insecticidal substance once said container (3) is ruptured,
characterized by,
said container (3) being frangible and being at least partially surrounded by a portion of said sheet of absorbent material (6); and
said enclosure (1) being made of flexible material and bearing a recess (4) fashioned to accommodate said container (3), and bearing a pressure point (7) or pressure pad at a location suitable for transmitting pressure for rupturing said container (3) when pressure is applied to said enclosure (1).

2. A device according to Claim 1, wherein the container (3) is an ampule.

3. A device according to Claim 2 wherein the ampule is made of glass.

4. A device according to any of Claims 1 to 3 wherein the absorbent sheet (6) is made of filter paper.

5. A device according to any of Claims 1 to 4 wherein the enclosure (1) is made of flexible plastics material.

6. A device according to any of Claims 1 to 5 wherein said container (3) is a frangible ampule, wherein said enclosure (1) comprises two flexible plastic disks attached to each other around their outer rims, one of said disks bearing said recess (4) containing said frangible ampule containing said liquid insecticidal substance, said disks having retained between them said sheet of absorbent material (6), being made of filter paper which also surrounds said ampule.

7. A device according to any of Claims 1 to 6 wherein the insecticidal substance is or contains hydroprene.

8. A method of controlling insects at an enclosed locus which comprises rupturing the frangible container (3) in a device according to any of Claims 1 to 7 and placing such device in said locus.

9. A method according to Claim 8 wherein the insecticidally active substance is hydroprene.

## Patentansprüche

1. Vorrichtung zur Kontrolle von Insekten bestehend aus einem im wesentlichen gas- und flüssigkeitsundurchlässigen Behälter (3) enthaltend einen zur Translokation befähigten, flüssigen insektiziden Wirkstoff, eine Platte aus absorbierendem Material (6) und einen Umbehälter (1) für den genannten Behälter (3) und die genannte absorbierende Platte (6), wobei der Umbehälter (1) mehrere Oeffnungen (2) trägt, welche die Translokation der genannten insektiziden Wirksubstanz zulassen, wenn der Behälter (3) zerbrochen wird, dadurch gekennzeichnet, dass der genannte Behälter (3) zerbrechlich ist und wenigstens teilweise von einem Teil der genannten Platte aus absorbierendem Material (6) umgeben wird und der genannte Umbehälter (1) aus einem flexiblen Material hergestellt ist und eine Vertiefung (4) enthält, welche so ausgestaltet ist, dass sie den genannten Behälter (3) aufnehmen kann und einen Druckpunkt (7) oder eine Druckplatte an einer Stelle trägt, die geeignet ist, den Druck zum Zerbrechen des genannten Behälters (3) zu übermitteln, wenn der Druck auf den Umbehälter (1) ausgeübt wird.

2. Vorrichtung gemäss Anspruch 1, worin der Behälter (3) eine Ampulle ist.

3. Vorrichtung gemäss Anspruch 2, worin die Ampulle aus Glas hergestellt ist.

4. Vorrichtung gemäss einem der Ansprüche 1 bis 3, worin die absorbierende Platte (6) aus Filterpapier hergestellt ist.

5. Vorrichtung gemäss einem der Ansprüche 1 bis 4, worin der Umbehälter (1) aus einem flexiblen Kunststoffmaterial hergestellt ist.

6. Vorrichtung gemäss einem der Ansprüche 1 bis 5, worin der genannte Behälter (3) eine zerbrechliche Ampulle ist, worin der genannte Umbehälter (1) aus zwei flexiblen Kunststoffscheiben, welche miteinander entlang ihrer äusseren Ränder verbunden sind, besteht und eine der Scheiben die genannte Vertiefung (4), welche die genannte zerbrechliche Ampulle enthaltend den genannten flüssigen insektiziden Wirkstoff enthält, und worin die genannten Scheiben zwischen sich die genannte Platte von absorbierendem Material (6), hergestellt aus Filterpapier, welches auch die Ampulle umgibt, stützen.

7. Vorrichtung gemäss einem der Ansprüche 1 bis 6, worin der insektizide Wirkstoff Hydroprene ist oder Hydroprene enthält.

8. Verfahren zur Kontrolle von Insekten an einem abgeschlossenen Ort, dadurch gekennzeichnet, dass man den zerbrechlichen Behälter (3) in einer Vorrichtung gemäss einem der Ansprüche 1 bis 7 zerbricht und diese Vorrichtung am genannten Ort plaziert.

9. Verfahren gemäss Anspruch 8, worin der insektizide Wirkstoff Hydroprene ist.

## Revendications

1. Un dispositif pour combattre les insectes qui comprend un récipient (3) pratiquement imperméable aux gaz et aux liquides contenant une substance insecticide liquide capable de se déplacer, une feuille de matière absorbante (6) et un coffret (1) pour ledit récipient (3) et ladite feuille absorbante (6), ledit coffret (1) comportant des ouvertures multiples (2) pour permettre le déplacement de ladite substance insecticide une fois que ledit récipient (3) est rompu,
caractérisé en ce que
ledit récipient (3) est cassable et est entouré au moins partiellement d'une portion de ladite feuille de matière absorbante (6), et
ledit coffret (1) est fait en matière flexible et comporte une dépression (4) façonnée de manière à y loger ledit récipient (3) et comporte un point de pression (7) ou un élément presseur en relief à un endroit approprié pour transmettre la pression destinée à briser ledit récipient (3) lorsque la pression est appliquée audit coffret (1).

2. Un dispositif selon la revendication 1, dans lequel le récipient (3) est une ampoule.

3. Un dispositif selon la revendication 2, dans lequel l'ampoule est en verre.

4. Un dispositif selon l'une quelconque des revendications 1 à 3, dans lequel la feuille absorbante (6) est du papier filtre.

5. Un dispositif selon l'une quelconque des revendications 1 à 4, dans lequel le coffret (1) est fait en matière plastique flexible.

6. Un dispositif selon l'une quelconque des revendications 1 à 5, dans lequel ledit récipient (3) est une ampoule cassable dans lequel ledit coffret (1) est constitué de deux disques en matière plastique flexible fixés l'un à l'autre par leurs bords extérieurs, l'un des disques comportant ladite dépression (4) contenant ladite ampoule cassable contenant ladite substance insecticide liquide et lesdits disques retenant entre eux ladite feuille de matière absorbante (6) faite de papier filtre qui entoure également ladite ampoule.

7. Un dispositif selon l'une quelconque des revendications 1 à 6, dans lequel la substance insecticide est l'hydroprène ou contient de l'hydroprène.

8. Une méthode pour combattre les insectes dans un endroit fermé, caractérisée en ce qu'on rompt le récipient cassable (3) dans un dispositif selon l'une quelconque des revendications 1 à 7 et qu'on place un tel dispositif dans ledit endroit.

9. Une méthode selon la revendication 8, dans laquelle la matière active du point de vue insecticide est l'hydroprène.
